# FASCICULE DE BREVET EUROPEEN

(11) **EP 3 233 580 B1**
(45) Date de publication et mention de la délivrance du brevet: **21.11.2018**
(21) Numéro de dépôt: 15818006.7
(22) Date de dépôt: 11.12.2015
(51) Int. Cl.: B60R 21/045, B60R 7/06

(54) **BOÎTE À GANTS DE VÉHICULE AUTOMOBILE**
HANDSCHUHFACH FÜR KRAFTFAHRZEUG
MOTOR VEHICLE GLOVE BOX

(30) Priorité: 16.12.2014 FR 1462499
(43) Date de publication de la demande: 25.10.2017
(73) Titulaire: RENAULT s.a.s., 92100 Boulogne-Billancourt (FR)
(72) Inventeur: MARCEAU, Thierry, 92500 Rueil Malmaison (FR); CHHEANG, Nakry, 78470 Saint Rémy Lès Chevreuse (FR); PHILBERT, Guy, 28500 Luray (FR)
(86) Numéro de dépôt international: PCT/FR2015/053432
(87) Numéro de publication internationale: WO 2016/097550

(56) Documents cités:
- EP-A1- 2 251 233
- EP-A1- 2 540 572
- DE-A1-102004 016 187
- FR-A1- 2 893 890
- FR-A1- 2 999 995
- JP-A- 2013 018 424
- US-A1- 2004 124 623

## Description

L'invention concerne une boîte à gants de véhicule automobile comprenant un réceptacle ménagé dans une planche de bord du véhicule et une porte montée mobile entre une position ouverte sensiblement horizontale dans laquelle une ouverture du réceptacle est dégagée et une position fermée sensiblement verticale dans laquelle l'ouverture du réceptacle est obturée,.

Les boîtes à gants de planche de bord comportent généralement une porte de fermeture qui peut présenter une forme saillant en direction des genoux du passager assis en face. Ainsi, en cas de choc, les genoux du passager risquent de percuter cette zone saillante de la porte de boîte à gant, ce qui peut entrainer chez ce dernier des lésions sérieuses.

Le document EP 2 251 233 A1 décrit une boîte à gants selon le préambule de la revendication 1.

On connait la publication FR-A-2893890, décrivant un bac de vide poche de planche de bord comportant un couvercle de fermeture mobile et comportant une patte déformable disposée dans un coin supérieur du couvercle opposé à l'axe de rotation dudit couvercle. La patte, en se déformant sous l'effet d'un impact causé par un genou d'un passager, permet au couvercle de se déformer vers l'avant, au-delà de sa position de fermeture.

Un tel dispositif permet de répondre à une norme de sécurité de type EuroNCAP qui spécifie par exemple que, après un enfoncement de l'ordre de 50 millimètres, la résistance des éléments sous le genou doit être comprise entre 250daN et 350daN pour une course d'environ 170 à 200 millimètres.

Cependant, selon l'architecture de la planche de bord et de la porte de boîte à gants, il peut être parfois nécessaire de prévoir des moyens d'absorption du choc supplémentaires permettant à la boîte à gants d'absorber un choc d'énergie supérieur. Afin de pallier ces inconvénients, l'invention a pour objet une boîte à gants de planche de bord de véhicule automobile qui présente des moyens d'absorption de choc efficaces et de conception simple.

A cet effet, l'invention propose une boite à gants du type cité ci-dessus, possédant les caractéristiques de la revendication 1.

Selon d'autres caractéristiques de l'invention:
- la ligne frangible est sensiblement horizontale ;
- la ligne frangible est constituée par une diminution de l'épaisseur de la paroi de la porte ;
- la ligne frangible s'étend sur toute la largeur de la porte ;
- la rainure a un profil en forme de U ;
- la rainure a un profil en forme de V ;
- la boite à gants comporte des moyens d'absorption de choc supplémentaires ;
- les moyens d'absorption de choc supplémentaires sont constitués par des zones frangibles ménagées dans des parois du réceptacle.

D'autres caractéristiques et avantages de l'invention apparaîtront à la lecture de la description d'exemples de réalisation d'une boîte à gants en référence aux dessins annexés dans lesquels :
- la figure 1 est une vue schématique générale en coupe latérale de la planche de bord côté passager ;
- la figure 2 est une vue en perspective d'une porte de boîte à gants ; et
- la figure 3 est une vue coupe latérale de la porte de boîte à gants de la figure 2. Dans la description qui suit, nous prendrons à titre non limitatif une orientation longitudinale, verticale et transversale indiquée par le trièdre L,V,T des figures 1 à 3, par rapport à la direction longitudinale avant-arrière du véhicule.

Le terme « sensiblement » utilisée en référence à une direction ou orientation signifie qu'un léger écart est admis dans le cadre de l'invention par rapport à une direction ou orientation nominale stricte. Par exemple « sensiblement horizontal » signifie qu'un écart de l'ordre de 10° est admis par rapport à une orientation strictement horizontale, sans sortir du cadre de l'invention.

Des éléments identiques ou analogues sont désignés par les mêmes chiffres de référence.

A l'exception des éléments spécifiques du poste de conduite, le véhicule présente une symétrie générale par rapport à un plan longitudinal médian.

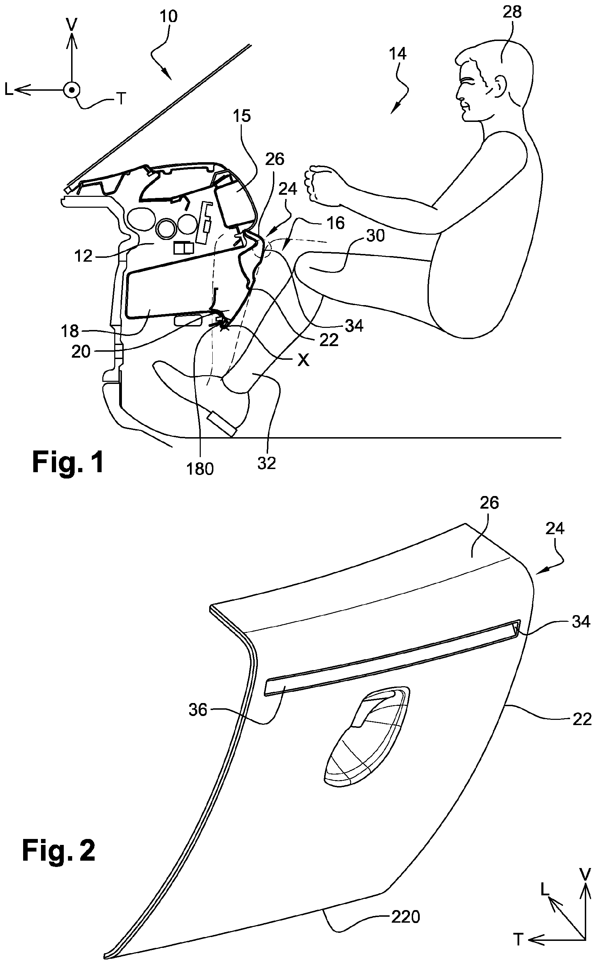

Tel que représenté à la figure 1, un véhicule 10 comporte une planche de bord 12 s'étendant transversalement à l'avant d'un habitacle 14 du véhicule 10.

A l'emplacement du passager, sous sa coiffe 15, la planche de bord 12 comporte une boîte à gants 16 constituée par un réceptacle 18 présentant une ouverture 20 débouchant vers l'arrière du véhicule et fermé par une porte 22.

La porte 22 de la boîte à gants est montée mobile autour d'un axe de rotation horizontal X porté par un bord inférieur 180 du réceptacle et un bord inférieur 220 de la porte 22 entre une position de fermeture sensiblement verticale dans laquelle la porte 22 obture l'ouverture 20 du réceptacle 18 et une position sensiblement horizontale de dégagement de l'ouverture 20 du réceptacle 18.

La porte 22 de la boîte à gants 16 présente dans sa partie supérieure une zone 24 coudée présentant un rebord 26 s'étendant vers l'avant du véhicule. La zone 24 forme ainsi une saillie vers l'intérieur de l'habitacle 14.

Ainsi lorsqu'un passager 28 est assis en face de la boîte à gants 16, ses genoux 30 sont en regard de la zone 24 de la porte 22 de la boîte à gants 16.

Tel que représenté à la figure 1 en pointillés, en cas de choc, les jambes 32 du passager 28 avançant, ses genoux 30 percutent la zone 24 de la porte de boîte à gants 16.

Pour absorber le choc, tel que représenté à la figure 2, la porte 22 de la boîte à gants 16 comporte une ligne frangible 34 horizontale, s'étendant sur toute la largeur de la porte 22. La ligne frangible 34 est disposée sous le coude formé par le rebord 26 et au-dessus d'un dispositif de verrouillage et de tirage 36 de la porte de boîte à gants 16. Selon les modèles de verrou utilisé, la ligne frangible 34 peut également se situer sous le dispositif de verrouillage.

La ligne frangible 34 est constituée par une réduction de l'épaisseur de la paroi de ka porte 22. Cette réduction de l'épaisseur de la paroi de la porte 22 forme ainsi une zone fragile susceptible de se rompre lorsque les genoux 30 du passager 28 entrent en contact avec la zone 24 sous l'effet d'un choc.

La présence de la ligne frangible 34 permet ainsi à la paroi de se déformer plus facilement vers l'intérieur du réceptacle et ainsi de mieux absorber l'énergie du choc. Tel que représenté à la figure 1, après rupture de la ligne frangible 34, les genoux 30 du passager 28 ont avancé à l'intérieur du réceptacle 18.

Cependant, la présence d'une réduction de l'épaisseur de la paroi peut entraîner des défauts d'aspect générés pendant le processus de moulage de la porte. En effet, lors du moulage par injection d'une pièce plastique, une variation d'épaisseur brusque crées des retassures visibles en surface qui se traduisent souvent par un aspect plus clair plus brillant que sur le reste de la pièce.

Pour éviter ce type de désagrément, la diminution d'épaisseur de la paroi est disposée au fond d'une rainure 36.

L'ouverture 38 de la rainure 36 est dirigée vers l'habitacle 14 du véhicule.

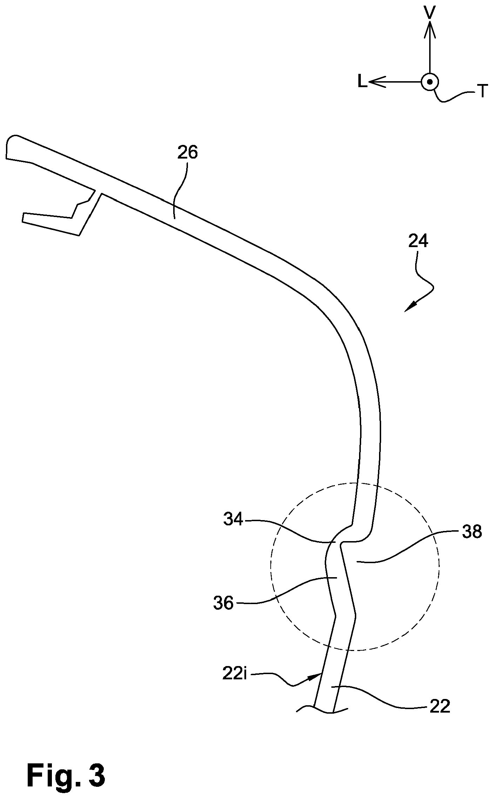

Selon l'invention et conformément à la figure 3, la rainure 36 est constituée par une déformation de la paroi de la porte 22, formant ainsi une protubérance sur une face interne 22i de la porte 22.

La forme du profil de la rainure peut varier entre une forme en V et une forme en U. Il est préférable d'orienter le profil face au sens de l'impact afin de faciliter la déformation.

La rainure 36 et la ligne frangible 34 peuvent être obtenues lors du moulage de la porte 22.

La rainure 36 peut ainsi présenter un aspect esthétique en participant au design de la planche de bord 12 tout en dissimulant les défauts d'aspects liés à la présence de la ligne frangible 34.

La longueur de la ligne frangible 34 et de la rainure 36 peut être adaptée à l'architecture de la porte 22 de la boîte à gants 16. Dans l'exemple représenté ici, la rainure 36 s'étend suivant la direction transversale du véhicule T sur une longueur de l'ordre d'au moins 80%, par exemple au moins 90% de la largeur de la porte 22 considérée suivant cette même direction. Dans des variantes de réalisation de l'invention, la longueur de la ligne frangible 34 et de la rainure 36 peut être plus limitée.

Dans l'exemple représenté ici, la rainure 36 est rectiligne, mais elle est peut également, dans une variante de réalisation, présenter une forme ondulée.

Dans l'exemple représenté ici, la rainure 36 est continue, mais elle peut également, dans une autre variante de réalisation de l'invention, présenter une forme discontinue, par exemple en forme de pointillé.

La boîte à gants peut également comporter d'autres moyens d'absorption de choc non représentés. Ces autres moyens d'absorption peuvent consister en des zones sécables disposées sur les parois du réceptacle 18 par exemple.

Ainsi, sous l'effet du choc, une première partie du réceptacle 18 vient s'emboîter dans la deuxième qui ne peut pas reculer en raison de la présence de la pare-close du moteur.

On peut également prévoir des moyens sécables au niveau de la charnière inférieure de la porte 22, aptes à se rompre sous l'effet d'un choc.

La combinaison de la ligne frangible 34 et des autres moyens d'absorption permet ainsi d'améliorer le dispositif.

## Revendications

1. Boîte à gants (16) de véhicule automobile comprenant un réceptacle (18) destiné à être ménagé dans une planche de bord (12) du véhicule et une porte (22) montée mobile entre une position ouverte sensiblement horizontale dans laquelle une ouverture du réceptacle (18) est dégagée et une position fermée sensiblement verticale dans laquelle l'ouverture du réceptacle (18) est obturée, les directions horizontale et verticale étant considérées lorsque le réceptacle (18) est aménagé dans la planche de bord (12), porte (22) de boîte à gants (16) comportant, dans une zone supérieure (24) disposée en regard des genoux (30) d'un passager (28), lorsque le réceptacle (18) est aménagé dans la planche de bord (12), une ligne frangible (34) en cas de contact des genoux (30) du passager (28) lors d'un choc de manière à absorber l'énergie du choc par déformation de la porte (22) vers l'intérieur du réceptacle (18), **caractérisée en ce que** la paroi de la porte (22) comporte une rainure (36) horizontale en creux au fond de laquelle l'épaisseur de la paroi est réduite de façon à constituer la ligne frangible (34), et **en ce que** la rainure (36) est constituée par une déformation de la paroi de la porte (22) formant une protubérance sur une face interne (22i) de la paroi de la porte (22).

2. Boite à gants (16) selon la revendication 1, **caractérisée en ce que** la ligne frangible (34) est sensiblement horizontale.

3. Boîte à gants (16) selon la revendication 1 ou 2, **caractérisée en ce que** la ligne frangible (34) est constituée par une diminution de l'épaisseur de la paroi de la porte (22).

4. Boîte à gants (16) selon la revendication 3, **caractérisée en ce que** la ligne frangible (34) s'étend sur toute la largeur de la porte (22).

5. Boîte à gants (16) selon l'une quelconque des revendications précédentes, **caractérisée en ce que** la rainure (36) a un profil en forme de U.

6. Boîte à gants (16) selon l'une quelconque des revendications précédentes, **caractérisé en ce que** la rainure (36) a un profil en forme de V.

7. Boîte à gants (16) selon l'une des revendications précédentes, **caractérisé en ce que** la boite à gants (16) comporte des moyens d'absorption de choc supplémentaires.

8. Boîte à gants (16) selon la revendication précédente, **caractérisé en ce que** les moyens d'absorption de choc supplémentaires sont constitués par des zones frangibles ménagées dans des parois du réceptacle (18).

## Patentansprüche

1. Handschuhfach (16) eines Kraftfahrzeugs, das einen Aufnahmebehälter (18), der dazu bestimmt ist, in einem Armaturenbrett (12) des Fahrzeugs angeordnet zu werden, und eine Tür (22) enthält, die zwischen einer im Wesentlichen waagrechten offenen Stellung, in der eine Öffnung des Aufnahmebehälters (18) freigelegt ist, und einer im Wesentlichen senkrechten geschlossenen Stellung beweglich montiert ist, in der die Öffnung des Aufnahmebehälters (18) verschlossen ist, wobei die waagrechte und die senkrechte Stellung betrachtet werden, wenn der Aufnahmebehälter (18) im Armaturenbrett (12) angebracht ist, wobei die Tür (22) des Handschuhfachs (16) in einem oberen Bereich (24), der sich vor den Knien (30) eines Fahrgasts (28) befindet, wenn der Aufnahmebehälter (18) im Armaturenbrett (12) angebracht ist, eine Linie (34) aufweist, die im Fall eines Kontakts der Knie (30) des Fahrgasts (28) bei einem Aufprall brechen kann, um die Energie des Aufpralls durch eine Verformung der Tür (22) zum Inneren des Aufnahmebehälters (18) zu absorbieren, **dadurch gekennzeichnet, dass** die Wand der Tür (22) eine waagrechte Hohlrille (36) aufweist, an deren Boden die Dicke der Wand verringert ist, um die Bruchlinie (34) zu bilden, und dass die Rille (36) aus einer Verformung der Wand der Tür (22) besteht, die einen Vorsprung auf einer Innenseite (22i) der Wand der Tür (22) bildet.

2. Handschuhfach (16) nach Anspruch 1, **dadurch gekennzeichnet, dass** die Bruchlinie (34) im Wesentlichen waagrecht ist.

3. Handschuhfach (16) nach Anspruch 1 oder 2, **dadurch gekennzeichnet, dass** die Bruchlinie (34) aus einer Verringerung der Dicke der Wand der Tür (22) besteht.

4. Handschuhfach (16) nach Anspruch 3, **dadurch gekennzeichnet, dass** die Bruchlinie (34) sich über die ganze Breite der Tür (22) erstreckt.

5. Handschuhfach (16) nach einem der vorhergehenden Ansprüche, **dadurch gekennzeichnet, dass** die Rille (36) ein U-förmiges Profil hat.

6. Handschuhfach (16) nach einem der vorhergehenden Ansprüche, **dadurch gekennzeichnet, dass** die Rille (36) ein V-förmiges Profil hat.

7. Handschuhfach (16) nach einem der vorhergehenden Ansprüche, **dadurch gekennzeichnet, dass** das Handschuhfach (16) zusätzliche Aufprallabsorptionseinrichtungen aufweist.

8. Handschuhfach (16) nach dem vorhergehenden Anspruch, **dadurch gekennzeichnet, dass** die zusätzlichen Aufprallabsorptionseinrichtungen aus Bruchzonen bestehen, die in Wänden des Aufnahmebehälters (18) vorgesehen sind.

## Claims

1. Motor vehicle glove box (16) comprising a receptacle (18) intended to be formed in a dashboard (12) of the vehicle and a door (22) mounted so as to be movable between a substantially horizontal open position in which an opening of the receptacle (18) is opened up and a substantially vertical closed position in which the opening of the receptacle (18) is closed off, the horizontal and vertical directions being considered when the receptacle (18) is built into the dashboard (12), the door (22) of the glove box (16) comprising, in an upper region (24) arranged opposite the knees (30) of a passenger (28), when the receptacle (18) is built into the dashboard (12), a line (34) which is frangible in the event of contact by the knees (30) of the passenger (28) during an impact so as to absorb the energy of the impact by deformation of the door (22) toward the inside of the receptacle (18), **characterized in that** the wall of the door (22) comprises a recessed horizontal groove (36) at the bottom of which the thickness of the wall is reduced so as to constitute the frangible line (34), and **in that** the groove (36) is constituted by a deformation of the wall of the door (22) forming a protuberance on an inner face (22i) of the wall of the door (22).

2. Glove box (16) according to Claim 1, **characterized in that** the frangible line (34) is substantially horizontal.

3. Glove box (16) according to Claim 1 or 2, **characterized in that** the frangible line (34) is constituted by a reduction in the thickness of the wall of the door (22).

4. Glove box (16) according to Claim 3, **characterized in that** the frangible line (34) extends over the whole width of the door (22).

5. Glove box (16) according to any one of the preceding claims, **characterized in that** the groove (36) has a U-shaped profile.

6. Glove box (16) according to any one of the preceding claims, **characterized in that** the groove (36) has a V-shaped profile.

7. Glove box (16) according to one of the preceding claims, **characterized in that** the glove box (16) comprises additional impact-absorbing means.

8. Glove box (16) according to the preceding claim, **characterized in that** the additional impact-absorbing means are constituted by frangible regions formed in walls of the receptacle (18).
